# EUROPEAN PATENT SPECIFICATION

(11) **EP 3 239 390 B1**
(45) Date of publication and mention of the grant of the patent: **06.11.2019**
(21) Application number: 16166994.0
(22) Date of filing: 26.04.2016
(51) Int. Cl.: D06F 58/28, D06F 58/20

(54) **METHOD FOR OPERATING A LAUNDRY DRYING APPARATUS AND LAUNDRY DRYING APPARATUS**
VERFAHREN ZUM BETREIBEN EINER WÄSCHETROCKNERVORRICHTUNG UND WÄSCHETROCKNERVORRICHTUNG
PROCÉDÉ POUR FAIRE FONCTIONNER UN APPAREIL DE SÉCHAGE DE LINGE ET APPAREIL DE SÉCHAGE DE LINGE

(43) Date of publication of application: 01.11.2017
(73) Proprietor: Electrolux Appliances Aktiebolag, 105 45 Stockholm (SE)
(72) Inventor: DALLA ROSA, Alessandro, 33080 Porcia (IT); BELLOMARE, Filippo, 33080 Porcia (IT); CAVARRETTA, Francesco, 33080 Porcia (IT)
(74) Representative: Electrolux Group Patents

(56) References cited:
- EP-A1- 2 284 310
- EP-A1- 2 733 255
- EP-A1- 2 746 457

## Description

The invention relates to a method for operating a laundry drying apparatus comprising a heat pump system during a drying program, and relates to a laundry drying apparatus, in particular a laundry dryer or a washer-dryer.

WO 2014/067797 A2 discloses a method for operating a laundry dryer comprising a heat pump system. To prevent an overheating of a compressor of the heat pump system, a process air fan performance is increased in dependency of a temperature of the heat pump system. Thereby the operation of the heat pump system does not have to be adjusted.

EP 2 284 310 A1 discloses a method for operating a heat pump dryer, wherein the loaded laundry amount is detected. According to an embodiment, the rotation speed of the compressor is adjusted in that for a half-load the compressor speed is reduced as compared to a compressor speed used for a full-load cycle. According to a another embodiment the rotation speed of the compressor is adjusted so that the rotation speed decreases with decreasing clothes weight due to evaporation of water during the drying cycle. According to a further embodiment, the compressor rotation speed is decreased after a delay time interval has elapsed from the detection of the maximum temperature value of the refrigerant.

It is an object of the invention to provide an energy-efficient method for operating a laundry drying apparatus and an energy efficient laundry drying apparatus.

The invention is defined in claims 1 and 14, respectively. Particular embodiments are set out in the dependent claims.

According to claim 1, a method for operating a laundry drying apparatus during a drying program is provided. The laundry drying apparatus, in particular a laundry dryer or a washer-dryer, comprises a drum adapted to receive laundry for drying the laundry using drying air, a drying air fan adapted to convey drying air through the drum, a motor adapted to drive the drying air fan, and a heat-pump system. The heat pump system comprises a first heat exchanger (condenser) adapted to heat the drying air, a second heat exchanger (evaporator) adapted to cool the drying air for humidity condensation and a compressor adapted to circulate refrigerant through the first and second heat exchangers. The compressor is a variable speed compressor and additionally or alternatively a variable power compressor. The variable speed and/or variable power compressor may be a compressor driven by a compressor motor, wherein the compressor motor is a variable speed and/or variable power motor. Preferably a control unit of the drying apparatus is controlling the execution of a drying program, i.e. the control unit is controlling the operation of the drying apparatus.

The laundry drying apparatus further comprises a laundry load indicating or detecting unit adapted to provide an amount of laundry which is loaded into the drum. The laundry load indicating or detecting unit may be a or the control unit with a memory for storing a user input for laundry load. Alternatively or additionally a laundry load indicating or detecting unit may include a load detector for example as disclosed in EP 1 413 664 B1 or WO 2014/095790 A1.

Load signals from the load detector may be subsequently stored in a or the control unit with a memory for storing load values during a running drying program, wherein the laundry load value corresponds to the laundry amount. The laundry amount includes at least a laundry load value (or laundry weight value) which indicates the weight of the laundry, wherein the laundry weight value may be a relative value which e.g. is proportional to the actual physical weight of the laundry.

The method for operating the laundry drying apparatus comprises the following steps:
- starting a drying program for drying the laundry received in the drum,
- operating the compressor at an initial compressor output,
- the laundry load indicating or detecting unit adapted to determine or estimate the amount of laundry in the drum (i.e. the amount of laundry which is loaded into the drum for drying) at least once during the drying program,
- setting a threshold value in dependency of the laundry amount,
- monitoring an operation parameter of the laundry drying apparatus, and
- operating the compressor at a reduced compressor output, if the monitored operation parameter reaches, exceeds the set threshold value.

The operation parameter which is monitored for exceeding or reaching the threshold value is an operation parameter of the heat-pump system.

This can be understood in the way that the settings of the drying program are modified in dependency of the laundry amount and - dependent on the laundry amount - the course of the drying program is different in that an operation parameter, which is monitored (detected) for controlling the drying program is compared to a threshold value that is dependent on the laundry amount. The reduced compressor output is lower than the initial compressor output. It is to be noted that the compressor 'output' is not only to be understood in the way that it is the output of the compressor, instead it is a compressor operation parameter or performance which is used to operate the compressor. E.g. an electrical parameter which is input to the compressor, for example input by an electrical inverter that is driving the compressor under the control of a or the control unit. Further it is noted that the 'initial' compressor output is not the short phase where the compressor is accelerated (normally within a few seconds) from the deactivated state to the activated state where the compressor operates with the intended operation parameter initial output (which preferably is a constant compressor output) until it is reduced to the adapted reduced compressor output.

It is noted that the steps of operating the compressor and determining or estimating the amount of laundry in the drum can be executed (at least partially) in parallel (concurrently) or may be interchanged in order (i.e. operating the compressor with the initial compressor output may be started before or after determining or estimating the laundry amount). For the purposes of the invention the laundry load is determined or estimated after start of the drying program and before setting the threshold value in dependency of the determined or estimated laundry amount, and the compressor is operated at the initial compressor output before it is operated at the reduced compressor output. The above correspondingly applies to the apparatus of the invention.

It has been found, that the energy performance or overall energy consumption of a drying cycle is improved, when the compressor output, e.g. compressor speed, is reduced at least once during the drying cycle. The inventors found out that the overall energy consumption can be more efficiently reduced, if during the drying program not only the compressor output is reduced when an operation parameter reaches a predetermined (but invariant) threshold, but that energy savings can be optimized (also under consideration of a reasonable drying program duration) when the amount or weight of the laundry to be dried is considered for defining the value of the predetermined threshold. I.e. there are at least two different threshold values that are applicable for different (ranges of) amounts or weights of laundry. As mentioned above, here a laundry amount representative of the physical weight or load of the laundry is used for the purposes of the control (or the control unit in the apparatus).

An adjustment (reduction) of the compressor output in dependency of the laundry amount is made at least once during the running drying program. For example the compressor output is adjusted after a significant heat-up of the heat-pump system has been achieved during the drying program which is indicated by the monitored operation parameter reaching the set threshold value (which e.g. is a threshold for the monitored/detected refrigerant temperature). A reduction of the compressor output and operating the compressor with the reduced compressor output may be executed at least one time during the drying program, or may be implemented several times (two times, three times or more times during the drying program).

In case the operation parameter is a refrigerant temperature or a temperature indicating a temperature of the refrigerant, at a high value of the laundry amount the temperature threshold is higher (e.g. a first threshold) than at a low value of the laundry amount where the temperature threshold is lower (e.g. a second threshold). Preferred the first value of the laundry amount (load) is or indicates a higher laundry amount (load) than the second value of laundry amount (load). For example, the first value indicates more than 50% of load or full load and the second value indicates less or equal 50% of load.

The above reduction of compressor output is preferably a reduction of compressor speed (e.g. as described above). Preferably 'reducing the compressor output' is the first time of reducing the compressor output.

In this context 'to set' the threshold value for the operation parameter preferably means that a or the control unit of the drying apparatus selects a value for the threshold in dependency of the laundry amount. For example, a (one out of at least two) threshold value is selected for a first laundry amount parameter or laundry amount range which is lower/higher than another threshold value available for another value or value range of the laundry amount. The applicable threshold values may be retrieved from a look-up table where different values of threshold values are stored for different values or ranges of laundry amounts.

In addition of setting the threshold value in dependency of the laundry amount, the degree of reduction of the compressor output (when the operation parameter reaches, exceeds the set threshold value) is also depending on the laundry amount. For example a or the control unit of the drying apparatus selects a value of decreasing the compressor output in dependency of the laundry amount. For example, a new absolute value is selected which is lower/higher than the previous absolute value of the compressor output. An example for 'reducing in dependency' is another look-up table where different values of compressor output are stored for different values or ranges of laundry amounts. E.g. if the laundry amount indicates a load of less than 50% maximum load, then the reduction of compressor parameter is in a range of 20 to 30% of the output parameter, while when the laundry amount indicates a load of 50% or more of the maximum load, then the reduction of the compressor parameter is in the range from 0, 2, 5 or 10% to below 20%.

The compressor is a variable speed compressor and reducing the compressor output is preferably implemented by reducing the compressor speed, wherein compressor speed corresponds to compressor motor rotation speed. Preferably the laundry drying apparatus comprises a compressor inverter adapted to provide or supply power to the compressor motor (e.g. under the control of the control unit of the apparatus). Preferred the compressor inverter adjusts the frequency of the voltage and/or current supplied to the compressor motor for controlling the speed of the compressor or compressor motor.

The operation parameter which is monitored for exceeding or reaching the threshold value is an operation parameter of the heat-pump system which may be one or more of:
- a temperature of the heat-pump system,
- a temperature of the compressor,
- a temperature of the refrigerant,
- a temperature of the refrigerant at the compressor outlet,
- a temperature of the refrigerant at the condenser outlet,
- a temperature representative for a temperature of the heat-pump system, and
- a pressure within the heat-pump system.

Most preferably the operation parameter of the heat pump system is the temperature of the refrigerant at the condenser outlet, i.e. at the outlet of the first heat exchanger, or at the compressor outlet. Preferably the temperature is or is indicating the temperature of the refrigerant. Preferably the above mentioned pressure within the heat pump system is the pressure of the refrigerant.

The laundry drying apparatus may further comprise a cooling air fan adapted to cool the compressor. The cooling air fan is activated for cooling the compressor in dependency of one or both of: (i) a compressor cooling profile, and (ii) a or the operation parameter of the heat-pump system reaching or exceeding a threshold. The temperature of a compressor shell or compressor housing tends to increase during the drying cycle, so that a cooling fan is activated to cool the compressor down preferably via the compressor shell or housing. The reduction (or reductions) of compressor output (e.g. compressor speed) reduces the total time during which the compressor cooling fan is in operation, which in turn leads to energy savings. For example, a threshold value of the refrigerant temperature may be used to switch on/off the compressor cooling fan, so that the refrigerant condensing temperature (and similarly the refrigerant temperature at the compressor outlet) is kept inside a desired temperature range. For some implementations it has been found, that by reducing the compressor output, a cooling of the compressor, i.e. switching on the compressor cooling fan, is not necessary as compared to a drying cycle where the compressor output is kept constant. Due to the reduced activation of the cooling fan the overall energy consumption of the drying cycle is reduced.

The compressor cooling profile and/or the threshold may be set in dependency of the laundry amount. The respective threshold of the operation parameter of the heat-pump system (and its respective dependency on the laundry amount) at which the compressor output is reduced and at which the cooling air fan is activated may be the same. Preferably they are different and/or are determined independent of each other. In particular, the above exemplary dependencies may be arbitrarily combined. For example, the threshold of the operation parameter of the heat-pump system, at which the compressor output is adapted, is dependent on the laundry amount and the extent to which or the ratio at which the compressor output is adjusted (reduced) is also dependent on the laundry amount.

According to an embodiment, the cooling air fan is activated during a running drying cycle before reducing the compressor output at a first value of the laundry amount, and the cooling air fan is activated later than or simultaneously with reducing the compressor output at a second value of the laundry amount.

According to a further embodiment, at a first value or range of the laundry amount the cooling air fan is activated/deactivated at a first set of hysteresis temperature thresholds of the heat pump system temperature and the compressor output is reduced at a first temperature threshold of the heat pump system temperature. At a second value or range of the laundry amount the cooling air fan is activated/deactivated at a second set of hysteresis temperature thresholds of the heat pump system temperature and the compressor output is reduced at a second temperature threshold of the heat pump system temperature. The first and second sets of hysteresis temperatures and the first and second thresholds are different of each other.

Preferably the heat pump system temperature is the above described temperature of the heat pump system or is the refrigerant temperature at the outlet of the condenser, i.e. first heat exchanger. For example, at full laundry load (e.g. indicated by the respective laundry amount) the cooling air fan hysteresis temperatures are 53 °C (switching on) and 54 °C (switching off) and at 50% laundry load (parameter) the cooling air fan hysteresis values are 52 °C (switching on) and 53 °C (switching off). For example, at full laundry load the threshold for compressor output reduction is 55 °C and for 50% laundry load the threshold for compressor output reduction is 52 °C. The respective full laundry load or 50% laundry load may be indicated or determined by means of the laundry amount indicating or detecting unit which estimates or determines the respective laundry amount. In an alternative embodiment the temperature threshold for activating the cooling air fan is the same temperature threshold for reducing the compressor output and/or the cooling air fan hysteresis thresholds for activating/deactivating the cooling air fan are not modified in dependency of the laundry amount while the compressor output is adapted in dependency of the laundry amount.

In an embodiment the drying air fan is an adjustable speed and/or power air fan or is driven by an adjustable fan motor. The method preferably further comprises at least one of: adjusting the speed and/or power of the drying air fan in dependency of the laundry amount; operating the drying air fan at a first value of the speed and/or power if the monitored operation parameter is below a drying air fan threshold value or below the set threshold value; and operating the drying air fan at a second value of the speed and/or power if the monitored operation parameter is above the drying air fan threshold value or above the set threshold value.

In addition to the dependency of the threshold value on the laundry amount, the setting of the threshold value may be dependent on the type of laundry. In this sense a 'laundry amount' may be a composed parameter that includes a laundry type indicator in addition to the laundry amount. Alternatively or additionally the degree of reduction of the compressor output is dependent on the type of laundry.

In addition to the dependency of the threshold value on the laundry amount (and optionally the laundry type), the setting of the threshold value may be dependent on the humidity degree of laundry. The humidity degree of the laundry may be an input value input by the user when loading the laundry and making program and option selections. Alternatively the humidity degree may be determined by the drying apparatus. For example, the humidity degree may be derived from a difference of drying air inlet and outlet temperatures at the drum (e.g. during an initial phase or during the first phase of the drying program). The humidity degree may be the humidity degree detected at a starting phase of the drying program or may be a current (presently detected) humidity degree. Alternatively the humidity degree may be derived from a condensation rate. Alternatively or additionally the degree of reduction of the compressor output is dependent on the humidity degree of the laundry.

The compressor output may be one or more of:
- a motor speed of a motor driving the compressor,
- an electrical power supplied to the compressor,
- the frequency of the electrical voltage supplied to the compressor, and
- the current supplied to the compressor.

The compressor output may be reduced by reducing the compressor output by at least 10%, 20%, 25%, 30% or 40% or the reduced compressor output is in the range of 85-95%, 75-90%, or 50-75% of the compressor output before reduction.

In addition to reducing the compressor output in dependency of an operation parameter which is dependent on the laundry amount, the drying air fan performance may be adjusted in dependency of the laundry amount. For example, the drying air fan performance is one or more of a motor speed of the motor driving the drying air fan, and the flow rate of the drying air conveyed by the fan. 'Fan speed' means the driving motor speed or a value proportional thereto. The flow rate corresponds to the conveyance rate of the drying air fan. Fan speed may be a fan rotation speed which in turn is equal to or is proportional to the fan motor speed. Flow rate relates to the total flow rate of drying air. Fan speed and fan flow rate are not necessarily related to each other.

The motor for driving the drying air fan may be a variable speed motor. In particular, the motor driving the fan may also drive the drum. When in this case the drum rotation is reversed, e.g. for slackening the laundry, the fan rotation is also reversed, whereby the air flow rate is reduced as generally a fan has a lower flow or conveyance rate when operated in a reverse direction. Alternatively, the drum is driven by a drum drive motor independent of a motor driving the fan. According to a further alternative, the drum and fan are driven by the same motor and a clutch element or a gear device is provided between the motor and the drying air fan, wherein the clutch element or gear device is adapted to drive the drying air fan at least temporally at different speeds. Consequence of a motor being a drive motor for drying air fan and drum is that drum speed is also variable in this case. The clutch element or a gear device also includes or may be replaced by clutch element and/or a gear device. In case of separate motors, the flexibility of available speed ranges for the fan is larger (in case a variable speed motor is provided).

Additionally one or more of the following drying operation parameters:
- the compressor output,
- the drying air fan performance, and
- the activation of a or the cooling air fan,
may be selected by a control unit of the drying apparatus in dependency of one or more of the following:
- a laundry drying program or a laundry drying option set by a user via an input selector of the drying apparatus;
- the laundry amount,
- a laundry type as set by a user or as estimated by the drying apparatus; and
- the duration of the laundry drying program set by a user or as estimated by the drying apparatus.
Preferably the drying operation parameters are selected during the running drying program to be applied during the running drying program.

According to a preferred embodiment, when the compressor is operated at a reduced compressor output, the compressor output is decreased over time according to a monotonically decreasing function or strictly monotonically decreasing function or a linearly decreasing function or a linearly decreasing function having two or more gradients. The decreasing function is a temporal function or a function 'over time'. The function (e.g. the strength of its gradient) may be dependent on the laundry amount and/or such function is applied from the time or state where the adjustment (reduction) of the compressor output is made in dependency of the laundry amount.

According to the invention, a laundry drying apparatus is provided, in particular a laundry dryer or a washer-dryer is provided, wherein the laundry drying apparatus comprises: a drum adapted to receive laundry for drying the laundry using drying air; a drying air fan adapted to convey drying air through the drum; a motor adapted to drive the drying air fan; a heat-pump system comprising a first heat exchanger adapted to heat the drying air, a second heat exchanger adapted to cool the drying air for humidity condensation, and a variable speed and/or variable power compressor adapted to circulate refrigerant through the first and second heat exchangers; a laundry load indicating or detecting unit adapted to determine or estimate the amount of laundry load in the drum (the 'laundry amount'); and a control unit controlling the execution of a drying program.

The control unit is adapted to execute the drying program by:
- starting a drying program for drying the laundry received in the drum (18), and
- operating the compressor (16) at an initial compressor output,
- setting a threshold value in dependency of the laundry amount determined or estimated by the laundry load indicating or detecting unit (52) at least once during the drying program,
- monitoring an operation parameter of the laundry drying apparatus, and
- operating the compressor (16) at a reduced compressor performance if the monitored operation parameter reaches or exceeds the set threshold value.

Preferably the control unit is adapted to control the drying program according to any of the above described embodiments.

According to another aspect of the invention, a method is provided for operating a laundry drying apparatus, in particular a laundry dryer or a washer-dryer, during a drying program, the laundry drying apparatus comprising:
a drum adapted to receive laundry for drying the laundry using drying air,
a drying air fan adapted to convey drying air through the drum,
a motor adapted to drive the drying air fan, and
a heat-pump system comprising a first heat exchanger adapted to heat the drying air, a second heat exchanger adapted to cool the drying air for humidity condensation, and a compressor adapted to circulate refrigerant through the first and second heat exchangers,
wherein the compressor is a variable speed and/or variable power compressor; and
wherein the method comprises:
   starting a drying program for drying the laundry received in the drum, and
   operating the compressor at a compressor performance which is decreased over the time according to a monotonically decreasing function or strictly monotonically decreasing function or a linearly decreasing function or a linearly decreasing function having two or more gradients.

For the embodiments of the above described method(s) for operating the drying apparatus as well as for the drying apparatus each isolated feature of the claims or description can be added or any arbitrary combination of isolated or individual features can be added to or provided in the claims. Any combination or sub-combination or individual features of the method and/or apparatus described above or below can be combined with the apparatus and/or method described above or below.

Reference is made in detail to preferred embodiments of the invention, examples of which are illustrated in the accompanying figures, which show:
- Fig. 1: a schematic view of a laundry dryer having a heat pump system,
- Fig. 2: a block diagram illustrating the control of some components of the laundry dryer of Fig. 1,
- Fig. 3: a diagram showing for a first load and a second load the time dependency of the compressor speed, the refrigerant temperature and the consumed compressor power,
- Fig. 4: a block diagram illustrating an embodiment of the compressor performance control during a drying cycle,
- Fig. 5: a schematic diagram illustrating a monotonically decreasing compressor speed pattern,
- Fig. 6: a schematic diagram illustrating a linearly decreasing compressor speed pattern, and
- Fig 7: a schematic diagram illustrating a compressor speed pattern made of a series of linearly decreasing segments.

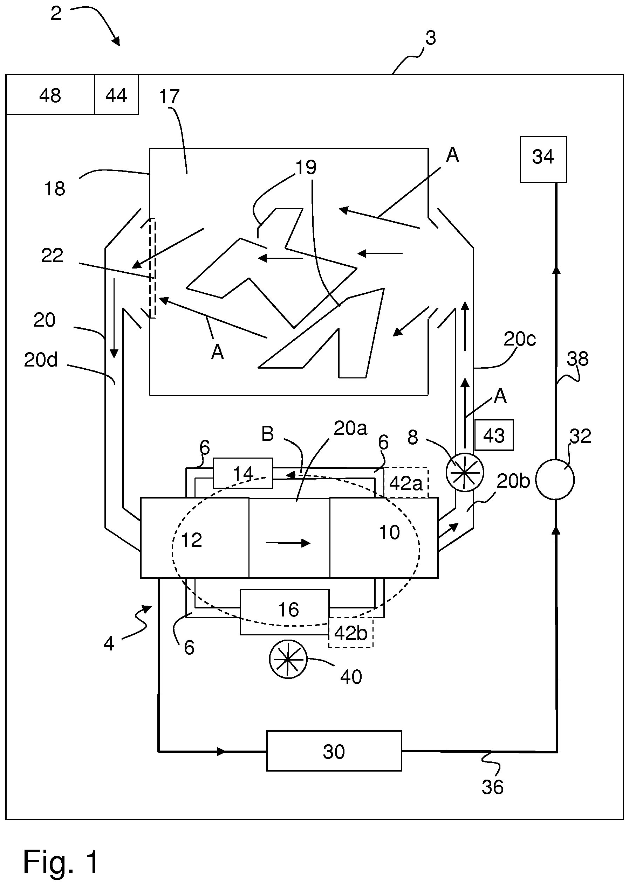

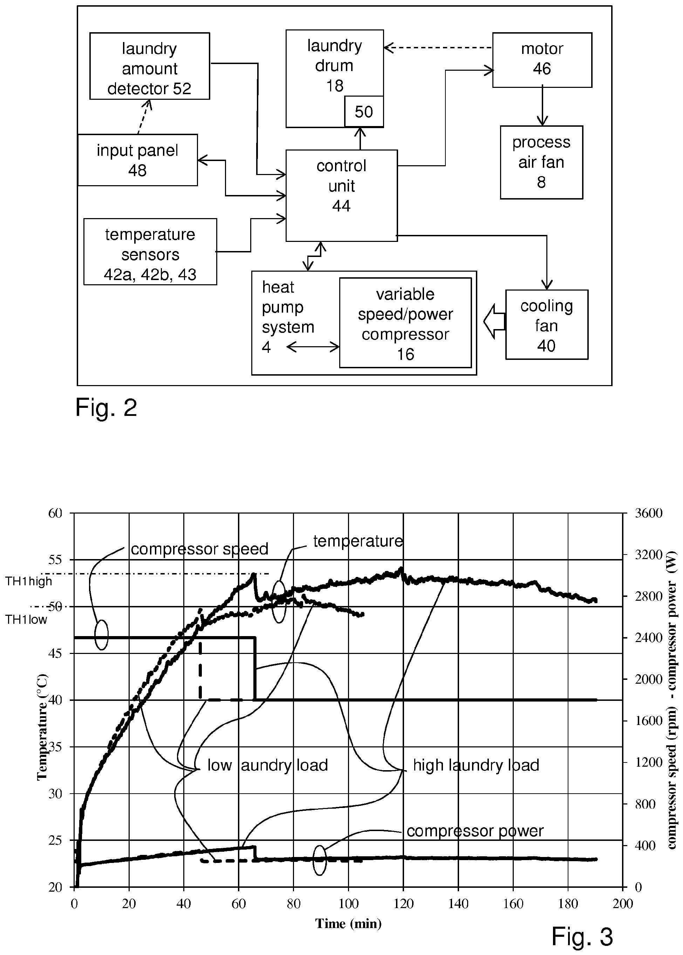

Fig. 1 shows a schematically depicted laundry dryer 2, which is not drawn to scale and is provided for illustrative purposes. The dryer 2 comprises a control unit 44 for controlling and monitoring the overall operation of the dryer 2 and its components and an input panel 48 for user-input, e.g. selection of a drying cycle, amount of laundry and/or type of laundry. Fig. 2 shows a block diagram to illustrate the control of some components of the laundry dryer 2 of Fig. 1 as described in detail below.

A heat pump system 4 is arranged in a housing 3 or cabinet of the dryer 2. The heat pump system 4 includes a closed refrigerant loop 6 which comprises in the following order of refrigerant flow B: a first heat exchanger 10 acting as condenser for cooling the refrigerant and heating the process air, an expansion device 14, a second heat exchanger 12, acting as evaporator for evaporating the refrigerant and cooling process air, and a compressor 16 from where the refrigerant is returned to the first heat exchanger 10. The compressor 16 is a variable speed and additionally or alternatively a variable power compressor. Together with the refrigerant pipes connecting the components of the heat pump system 4 in series, the heat pump system 4 forms the refrigerant loop 6 through which the refrigerant is circulated by the compressor 16 as indicated by arrow B. A cooling fan 40 controlled by the control unit 44 may be provided for cooling the compressor 16 (e.g. via an outer shell of the compressor).

The process air flow A within the dryer 2 is guided through a laundry storing compartment 17 of the dryer 2, i.e. through a compartment for receiving articles to be treated, e.g. a drum 18. The drum 18 may be driven by drum drive motor 50 (Fig. 2) controlled by control unit 44. The articles to be treated are textiles, laundry 19, clothes, shoes or the like.

The process air flow is indicated by arrows A in Fig. 1 and is driven by a process air blower or drying air fan 8. A motor 46 (Fig. 2) for driving the drying air fan 8 may be a variable speed motor 46 controlled by the control unit 44, such that the fan speed may be adjusted. The motor 46 driving the fan 8 may also drive the drum 18 (as indicated with dashed arrow in Fig. 2), wherein in this case the drum motor 50 could be omitted. When a single motor 46 is used to drive the fan 8 as well as the drum 18, a clutch element or a gear device (not depicted) may be provided to split the drive of drum and fan. By means of the clutch element or gear device the control unit is adapted to drive the drying air fan 8 at least temporarily at different speeds such that fan speed and air flow rate may be varied.

The process air channel 20 guides the process air flow A outside the drum 18 and includes different sections, including the section forming the battery channel 20a in which the first and second heat exchangers 10, 12 are arranged. The (heated) process air exiting the first heat exchanger 10 flows into a rear channel 20b in which the drying air fan 8 is arranged. The air conveyed by fan 8 is guided upward in a rising channel 20c to the backside of the drum 18. The air exiting the drum 18 through the drum outlet may be filtered by a fluff filter 22 arranged close to the drum outlet in or at the channel 20. The optional fluff filter 22 is arranged in a front channel 20d forming another section of channel 20 which is arranged behind and adjacent the front cover of the dryer 2.

Condensate formed at the second heat exchanger 12 is collected and guided to a condensate collector 30. The condensate collector 30 may be connected via a drain conduit 36, a drain pump 32 and a drawer pipe 38 to an extractable condensate drawer 34. I.e. the collected condensate can be pumped from the collector 30 to the drawer 34 which may be arranged at an upper portion of the dryer 2 from where it can be comfortably withdrawn and emptied by a user.

The dryer 2 comprises a laundry amount detector 52 (Fig. 2) for detecting or determining the laundry load within the drum 18. As indicated with a dashed arrow, the laundry load may be determined from a user input for laundry load at the input panel 48. For example, the laundry amount detector may be a (or the) control unit 44 comprising a memory for storing a user input for laundry load. Alternatively the laundry load may be detected by means of a weight sensor or the laundry amount may be detected by evaluating operation parameters of the dryer 2, e.g. drum motor torque. Load signals or laundry amount signals from load detector 52 may be subsequently stored in the control unit 44 with a memory for storing load values during a running drying program, wherein the laundry load value corresponds to the laundry amount. The detected or determined laundry amount includes at least a laundry load value which indicates the weight of the laundry, wherein the laundry weight value may be a relative value which e.g. is proportional to the actual physical weight of the laundry.

The dryer 2 may comprise a temperature sensor 42a at the outlet of the compressor 16 and/or a temperature sensor 42b at the outlet of the condenser 10 for detecting the temperature of the refrigerant or a temperature indicative or representative of the refrigerant temperature. A temperature sensor 43 is provided for detecting the process air temperature, for example at a position downstream the blower 8 and upstream the drum 18.

As described in the following in relation to the exemplary diagrams of Fig. 3 to Fig. 7, an energy-efficient method for operating a dryer 2 as described above is provided.

It has been found, that the energy performance of the dryer 2 or a respective drying cycle is improved, when the output of the compressor 16 is reduced at least once during a drying cycle or drying program in dependency of laundry load. Compressor output may be a motor speed of the motor driving the compressor 16, and/or an electrical power supplied to the compressor 16. In the following examples compressor output is reduced by reducing compressor speed, i.e. by reducing the motor rotational speed of the motor driving the compressor 16. The refrigerant temperature at the outlet of the condenser 10 is detected by means of temperature sensor 42a at the condenser outlet, e.g. by means of a NTC sensor.

As described above, a thermodynamic cycle or drying cycle in a heat pump dryer, both with regard to the refrigerant side and the process-air side the condensation and evaporation temperatures of the refrigerant at the outlet of the condenser 10 increase after starting the drying process (here: after starting the compressor). Similarly, the condensation and evaporation pressure increases as well. When the process air temperature and refrigerant temperature reach an optimum temperature level that is a good compromise between efficiency and effectiveness of the drying process, the system may be artificially stabilized ("balanced") by the use of the cooling fan 40 that is acting on the shell of the compressor 16 with an on/off control strategy. By stabilizing the heat pump system 4 at the optimum temperature level also energy consumption of the compressor 16 is stabilized. Examples for above optimum temperature levels are: an air temperature at drum inlet between 55 °C and 65 °C and/or a refrigerant temperature at condenser 10 outlet between 45 °C and 55 °C.

Actually the 'optimum' working temperature (refrigerant temperature) or the 'optimum' working condition of the heat pump system 4 is a complex multi-parameter function of internal and external parameters and the optimum conditions change over time and may in particular change faster than it is possible to adapt for example the 'optimum' refrigerant temperature of the heat pump system. The inventors became aware that the laundry amount is an important parameter for optimizing the working condition of the heat pump system and the overall energy consumption of the heat pump system and the dryer 2 (as an example for a laundry drying apparatus having a heat pump system).

In an embodiment not depicted, the compressor speed is reduced independent of the laundry amount, however:
- the degree of reduction of the compressor speed is dependent on the laundry amount (preferably the degree of compressor speed reduction is the higher the lower the laundry amount (e.g. laundry load)), and/or
- the refrigerant temperature threshold at which the cooling fan is activated after the first time of compressor speed reduction is dependent on the laundry amount (preferably the refrigerant temperature threshold is the higher the higher the laundry amount (e.g. laundry load)).

Fig. 3 shows a diagram with the compressor speed, the refrigerant temperature and the consumed compressor power over time for a first drying cycle in which the laundry in the drum has a first laundry load (the laundry amount indicates a first laundry load, e.g. full load) and a second drying cycle in which the laundry has a second laundry load (the laundry amount indicates a second laundry load, e.g. half load), wherein the second laundry load is lower than the first laundry load. It is to be noted that in the embodiments described here the compressor output is exemplified by the compressor speed.

The continuous-drawn curves in the diagram of Fig. 3 indicate the first drying cycle (denoted as 'high laundry load') and the dashed-line curves indicate the second drying cycle (denoted as 'low laundry load'). The lower amount of laundry used in the second cycle is dried in a shorter time period (about 105 min in this example) while drying the higher amount of laundry takes a longer time in the first cycle (about 190 min) for drying the laundry to the same final-humidity for the laundry (as set e.g. by the user).

In the first drying cycle the laundry amount detector 52 indicates to the control unit 44 the first laundry amount and the control unit compares this with a load threshold (compare for example the ranges shown in the below table). As the laundry amount is above the load threshold, the control unit sets the refrigerant temperature threshold to a first threshold TH1high, which in this case is 54°C. When the rising refrigerant temperature arrives at or exceeds the TH1high value (in the example at around 65 min), the rotation speed of the compressor motor ('compressor speed') is reduced from the initial 2400 rpm to 1800 rpm. In that the control unit 44 controls the compressor 16 (in particular an inverter of the compressor) to reduce the rotation speed, at the same time the power consumption of the motor is reduced (in the example from about 400 W to about 300 W).

In the second drying cycle the laundry amount detector 52 indicates to the control unit 44 the second laundry amount and the control unit compares this with the load threshold (same load threshold as above). As the laundry amount is at or below the load threshold, the control unit sets the refrigerant threshold to a second threshold TH1low, which in this case is 50°C. When in the second drying cycle the rising refrigerant temperature arrives at or exceeds the THllow value (at around 43 min), the rotation speed of the compressor motor ('compressor speed') is reduced from the initial 2400 rpm to 1800 rpm. This is the same reduction as in the first cycle with the difference that due to the different refrigerant (first/second) thresholds the time where speed reduction is executed is different (about time 43 min as compared to about time 65 min). Also in the second drying cycle the speed reduction results in a power reduction which is in the example for the second drying cycle from about 380 W to about 290 W).

By the lower second threshold THllow the cycle power consumption of the compressor is reduced without over-extension of the drying duration so that in overall balance the power consumption is reduced while the duration of the first drying cycle can be kept short due to the higher first threshold TH1high.

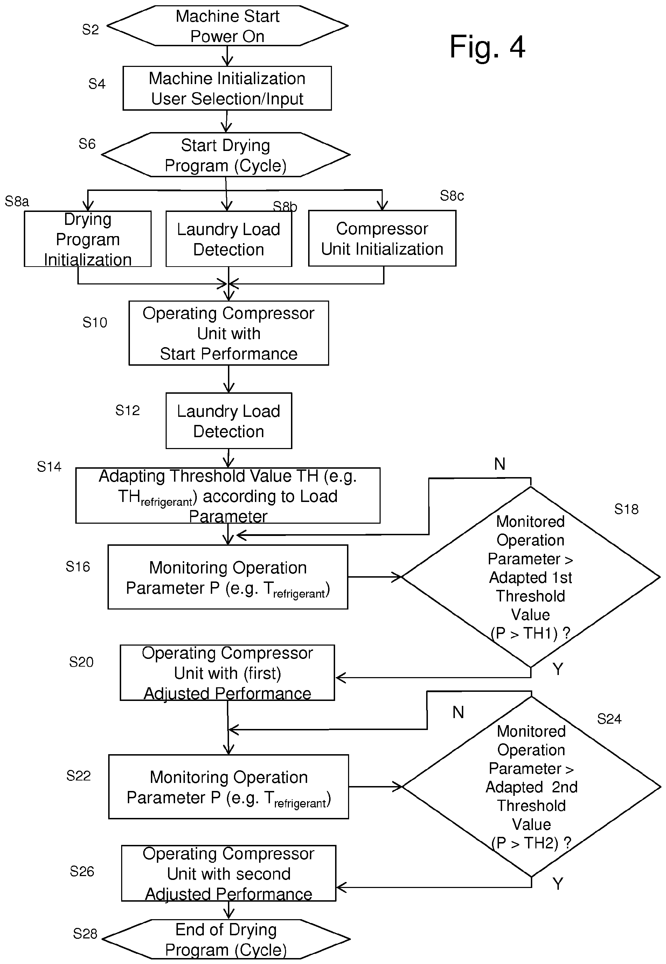

Fig. 4 is a block diagram illustrating an embodiment of the compressor output control during a drying program (cycle). The user switches on the dryer 2 at step S2. At step S4 the control unit 44 of the dryer 2 is initialized and the user is inputting drying program selection and options. At S6 the user starts the program, e.g. by pressing the start button at the input panel 48. With the information available at that stage, e.g. using the user selections and inputs, in parallel the drying cycle (drying program) is initialized (step S8a), the drum is driven according to a predefined scheme for laundry load detection (step S8b) and the compressor unit (e.g. the inverter of the compressor) is initialized (step S8c). The compressor is started (step S10) with the starting conditions according to the start initialization corresponding to a start output (e.g. ramp-up to start rotational speed and start voltage/current).

After a predetermined time (e.g. a predefined duration after start of the drum and/or compressor rotation) the laundry load detection is repeated (step S12) and in dependency of this detected amount the threshold value TH (e.g. for the refrigerant temperature TH_{refrigerant}) is set (step S14). As mentioned above and below, in dependency of the detected laundry amount one out of two, three, four or more different refrigerant temperature thresholds TH_{refrigerant} may be set (see THllow and TH1high in Fig. 3) or the temperature threshold may be calculated using the detected laundry amount.

Relating to detection of the laundry load ('laundry amount') it is noted that in the depicted block diagram embodiment the laundry detection in step S12 is used to verify the laundry detection of step S8b (e.g. in form of a plausibility check), however in embodiments only one of the laundry load detections S8b or S12 may be used for adapting the threshold value in step S14. In further embodiments the laundry detection may be made concurrently with starting or operating the compressor unit with the start performance (S10).

The drying cycle is continued and an operation parameter P is monitored/detected (step S16), which in this example is the refrigerant temperature T_{refrigerant}. In step S18 the refrigerant temperature is compared to the adjusted refrigerant temperature threshold TH1 (e.g. TH1_{refrigerant}) and as long as the refrigerant temperature (monitored operation parameter P) is lower than the threshold, the drying cycle is continued (steps S16-S18) with the starting operation output of the compressor as set at S10.

In case the refrigerant temperature exceeds the threshold TH1 in S18, the program continues at S20 with setting a first adjusted operation output for the compressor 16 and operating the compressor at this adjusted operation output. In the examples shown in Fig. 3, the adjusted compressor operation output is the same, namely reducing the compressor speed from 2400 rpm to 1800 rpm, independent of the detected laundry amount and the adapted threshold values for the refrigerant temperature. In alternative embodiments the adjusted compressor output may also be dependent on the laundry amount and/or on the adapted threshold value for the monitored operation parameter.

After having adjusted the compressor output the first time in step S20, the drying cycle may be continued until the end without adjusting the compressor output a second time (as for example shown in Fig. 3).

In the embodiment block diagram of Fig. 4 the operation parameter P (e.g. the refrigerant temperature T_{refrigerant}) is further monitored/detected (step S22) and when it exceeds a second threshold value TH2 in step S24, the operation output of the compressor is adapted a second time in step S26. Preferably the second threshold value TH2 is determined at step S14 simultaneously with the first threshold value TH1. Preferably the second threshold value TH2 is also dependent on the laundry amount as for example detected in step S12.

In an embodiment the first and second thresholds TH1 and TH2 could have the same values. Independent of the value of TH1 and TH2 it is preferably that the absolute value of reduction of the compressor power at the first reduction (TH1) and the second reduction (TH2) is different of each other, and more preferably the absolute value of the reduction of the compressor output at the second threshold TH2 is lower than the absolute value of the compressor output reduction at the first threshold TH1. For example the first reduction may be from the compressor speed from 2500 rpm to 1800 rpm (as shown in Fig. 3, S20) and the second reduction may be from 1800 rpm to 1600 rpm (S26).

Returning to the flow diagram in Fig. 4, the end of the drying program/drying cycle at step S28 is for example determined using a final humidity of the laundry as input by the user and as detected with a laundry humidity sensor (not shown) and/or after lapse of a drying time which has been determined in a starting phase of the drying cycle (e.g. parallel to S8a - S8c).

Besides changing the compressor output when the refrigerant temperature (the monitored operation parameter) is exceeding a threshold (TH1 and optionally TH2 in Fig. 4) in further embodiments additionally:
- the performance (power and/or speed) of the process air fan 8 (which conveys the drying air) can be changed in dependency whether a process parameter overshoots a drying air fan threshold which is set in dependency of the laundry amount (laundry load), and/or
- the activation of the cooling air fan 40 can be changed in dependency whether a process parameter overshoots a cooling air fan threshold which is set in dependency of the laundry amount.

The following table shows an example, where the (first) temperature threshold TH1 for the refrigerant temperature T_{refrigerant} depends on the detected laundry load and assumes three different values depending on the laundry amount falling in one of three ranges. Further the temperature values of the refrigerant temperature T_{refrigerant} at which the compressor cooling fan 40 is activated (higher value) and deactivated (lower value) according to a hysteresis-scheme is dependent on the laundry load. In the last column of the table it is indicated how a threshold of the drying air temperature as detected with drying air temperature sensor 43 is dependent on the laundry amount being in one of the three ranges. If the detected drying air temperature exceeds the drying air temperature threshold as set in dependency of the laundry load, the operation parameter of the process air blower 8 is adjusted to a new value (which in turn may also be dependent on the detected laundry amount). If for example the drying air temperature threshold is exceeded, the rotation speed of the blower 8 is increased.

| Laundry Load Range | | Refrigerant Temperature Threshold for Compressor Reduction | Refrigerant Temperature Hysteresis Thresholds for Cooling Fan Activation/Deactivation | | Drying Air Temperature Threshold |
|---|---|---|---|---|---|
| above 5 kg | high | 56°C | 57°C | 55°C | 45°C |
| 3 - 5 kg | middle | 53°C | 57°C | 52°C | 44°C |
| below 3 kg | low | 50°C | 54°C | 52°C | 42°C |

For simplicity in the table the three laundry load ranges apply for all thresholds to be set in the same way, however in embodiments for each or a group of the thresholds to be set another laundry load range may apply.

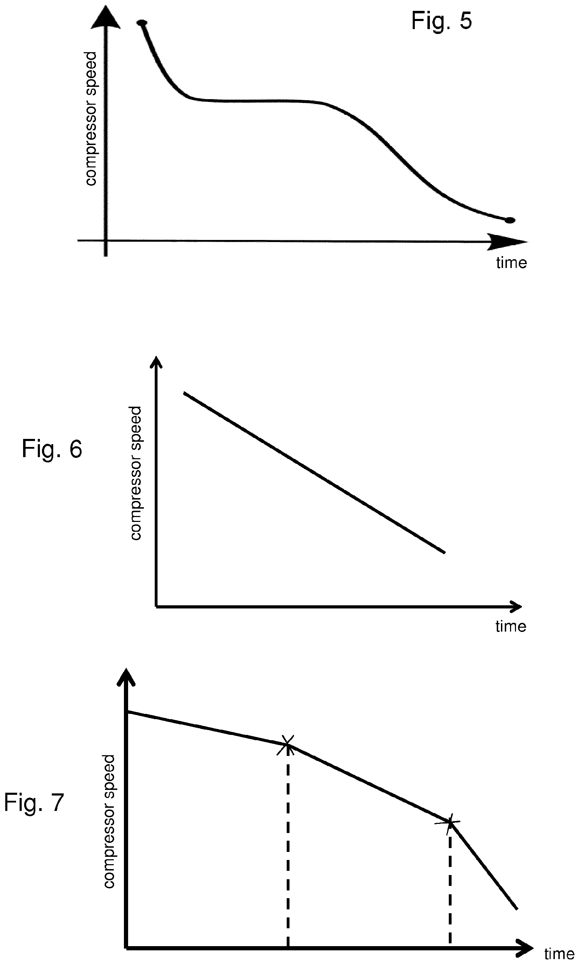

As described above, the compressor speed is reduced at least once in one step (Fig. 3, S20 Fig. 4) or more steps (S. 26 in Fig. 4) in dependency of the laundry amount (and the refrigerant temperature). Figs. 5 to Fig. 7 show different compressor speed patterns or control strategies for reducing compressor speed. The below described control strategies for compressor speed improve the overall energy efficiency of the dryer 2 and respective drying cycle.

When the compressor speed follows a monotonically decreasing pattern during a drying cycle the energy performance is improved, i.e. energy consumption is reduced. Since the compressor speed at time zero is null (0 rpm) as the compressor is deactivated before starting the drying cycle, there is a certain period of time at the beginning of a drying cycle - usually less than 200 s - where the compressor speed follows a different pattern than the ones described. This 'initialization' phase should not be considered here regarding the control pattern for reducing the compressor speed.

A function f is called monotonic, if it is either entirely non-increasing or non-decreasing. It is called monotonically increasing, if for all x and y such that x ≤ y one has f(x) ≤ f(y), so f preserves the order. Likewise, a function is called monotonically decreasing if, whenever x ≤ y, then f(x) ≥ f(y), so it reverses the order (Fig. 5). A function with the strict order '<' or '>' has a stronger requirement and is called strictly increasing (or strictly decreasing).

The value of compressor speed at the starting time of the compressor control strategy may depend on a user-made selection at input panel 48, a signal coming from one or more of the temperature sensors 42a-b and/or the laundry load or amount.

One or more of the following control strategies may be applied:
i) a monotonically decreasing control pattern for compressor speed control (Fig. 5),
ii) a strictly decreasing control pattern for compressor speed control, e.g. a linearly decreasing function (Fig. 6), wherein the slope of the straight line may depend on a user-made selection at input panel 48, a signal coming from one or more of the temperature sensors 42a-b and/or the load or amount, and
iii) a control pattern which consists of a series of at least two linearly decreasing segments of straight lines (Fig. 7), wherein the slope of each segment depends on a signal coming from one or more of the temperature sensors 42a-b, a signal from a conductometric sensor or any other estimate of a drying level of the laundry to be dried and/or the load or amount.

**Reference Numeral List**

| | | | |
|---|---|---|---|
| 2 | laundry dryer | 22 | fluff filter element |
| 3 | housing | 30 | condensate collector |
| 4 | heat pump system | 32 | drain pump |
| 6 | refrigerant loop | 34 | condensate drawer |
| 8 | blower | 36 | drain conduit |
| 10 | first heat exchanger (condenser) | 38 | drawer pipe |
| 12 | second heat exchanger (evaporator) | 40 | cooling fan |
| 14 | expansion device | 42a-b | temperature sensor |
| 16 | compressor | 43 | process air temperature |
| 17 | laundry storing compartment | 44 | control unit |
| 18 | drum | 46 | fan motor |
| 19 | laundry | 48 | input panel |
| 20 | process air channel | 50 | drum motor |
| 20a | battery channel | 52 | laundry amount detector |
| 20b | rear channel | | |
| 20c | rising channel | A | process air flow |
| 20d | front channel | B | refrigerant flow |

## Claims

1. Method for operating a laundry drying apparatus, in particular a laundry dryer or a washer-dryer, during a drying program,
the laundry drying apparatus (2) comprising:
a drum (18) adapted to receive laundry (19) for drying the laundry using drying air,
a drying air fan (8) adapted to convey the drying air through the drum (18),
a motor (46) adapted to drive the drying air fan (8),
a heat-pump system (4) comprising a first heat exchanger (10) adapted to heat the drying air, a second heat exchanger (12) adapted to cool the drying air for humidity condensation, and a compressor (16) adapted to circulate refrigerant through the first and second heat exchangers (10, 12), and
a laundry load indicating or detecting unit (52) adapted to determine or estimate the amount of laundry in the drum,
wherein the compressor (16) is a variable speed and/or variable power compressor; and
wherein the method comprises:
starting (S6) a drying program for drying the laundry received in the drum (18),
operating (S8c, S10) the compressor (16) at an initial compressor output,
determining or estimating (S8b, S12) the amount of laundry in the drum at least once during the drying program,
**characterized in that**
the method further comprises:
setting (S14) a threshold value (TH1) for an operation parameter (P) of the heat pump system in dependency of the determined or estimated amount of laundry,
monitoring the operation parameter (P) of the heat pump system of the laundry drying apparatus (2), and
operating (S20) the compressor (16) at a reduced compressor output if the monitored operation parameter (P) reaches or exceeds the set threshold value (TH1).

2. Method according to claim 1, wherein setting (S14) the threshold value (TH1) includes one or more of:
a first threshold (TH1high) is selectable in response to a first laundry amount (full load) and a second threshold (TH1low) is selectable in response to a second laundry amount (half load), wherein the first threshold (TH1high) is higher than the second threshold (TH1low) and the first laundry amount (full load) is higher than the second laundry amount (half load),
at least two threshold values are selectable and there are at least two ranges of laundry amounts each having non-overlapping ranges, wherein for the lower range of laundry amounts the first threshold value (TH1low) is selected and for the higher range of laundry amounts the second threshold value (TH1high) is selected,
the value of the threshold value (TH1) increases in response to the increasing of the laundry amount or is the higher the higher the laundry amount is, and
the value of the threshold value (TH1) is a step-function in dependency of the value of the laundry amount, wherein the step-function has at least one, two, three or more steps, wherein preferably the step-function is a monotonically increasing function.

3. Method according to claim 1 or 2, wherein during the drying program the threshold value (TH1, TH2) is set at least two times, wherein at least one or at least two of the threshold values are set in dependency of the laundry amount and wherein each one of the at least two threshold values is different to the other threshold values.

4. Method according to any of the previous claims, wherein the laundry amount used for setting the threshold value (TH1) or the two or more threshold values (TH1, TH2) is the laundry amount indicated or detected by the detecting unit (52) in at least one of the following:
- in a starting phase (S8b) of the drying program,
- in a beginning phase (S8b, S12) after starting the rotation of the drum (18) the first time during the drying program,
- when the detecting unit (52) indicates or detects the first time a reliable and/or reproducible laundry amount after starting the drying program, and
- as input by a user via an input panel (48) of the apparatus (2).

5. Method according to any of the previous claims, wherein the monitored operation parameter (P) is one or more of:
a temperature of the heat-pump system (4),
a temperature of the compressor (16),
a temperature of the refrigerant,
a temperature of the refrigerant at the compressor outlet (42b),
a temperature of the refrigerant at the condenser outlet (T_{refrigerant}, 42a),
a temperature representative for a temperature of the heat-pump system (4), and
a pressure within the heat-pump system (4).

6. Method according to any of the previous claims,
wherein the laundry drying apparatus (2) further comprises a cooling air fan (40) adapted to cool the compressor (16), and
wherein cooling air fan (40) is activated for cooling the compressor (16) in dependency of one or more of:
a compressor cooling profile,
a compressor cooling profile set in dependency of the laundry amount,
a or the operation parameter (P) of the heat-pump system (4) reaching or exceeding a fan activation threshold, and
the monitored operation parameter (P) reaching or exceeding the set threshold value (TH1, TH2).

7. Method according to claim 6, wherein the fan activation threshold is one or more of:
is lower or higher than the set threshold value (TH1),
is set in dependency of the laundry amount, and
is a predetermined value higher or lower than the set threshold value (TH1).

8. Method according to any of the previous claims,
wherein the laundry drying apparatus (2) further comprises a or the cooling air fan (40) adapted to cool the compressor (16),
wherein at a first value or first value range of the laundry amount the cooling air fan (40) is activated/deactivated at a first set of hysteresis temperature thresholds of the heat pump system temperature and the compressor output is reduced at the set first temperature threshold (TH1low) of the heat pump system temperature,
wherein at a second value or second value range of the laundry amount the cooling air fan (40) is activated/deactivated at a second set of hysteresis temperature thresholds of the heat pump system temperature and the compressor output is reduced at the set second temperature threshold (TH1high) of the heat pump system temperature, and
wherein the first and second sets of hysteresis temperatures and the first and second set thresholds (TH1low, TH1high) are different of each other.

9. Method according to any of the previous claims, wherein the compressor output is one or more of:
a motor speed of a motor driving the compressor (16),
an electrical power supplied to the compressor (16),
the frequency of the electrical voltage supplied to the compressor (16), and
the current supplied to the compressor (16).

10. Method according to any of the previous claims, wherein the drying air fan (8) is an adjustable speed and/or power air fan or is driven by an adjustable fan motor and wherein the method further comprises at least one of:
adjusting the speed and/or power of the drying air fan (8) in dependency of the laundry amount,
operating the drying air fan at a first value of the speed and/or power if the monitored operation parameter (P, 43) is below a drying air fan threshold value or below the set threshold value, and
operating the drying air fan at a second value of the speed and/or power if the monitored operation parameter (P, 43) is above the drying air fan threshold value or above the set threshold value.

11. Method according to any of the previous claims, wherein the compressor output is reduced by reducing the compressor output by at least 10%, 20%, 25%, 30% or 40% or the reduction of the compressor output is in the range of 85-95%, 75-90%, or 50-75%.

12. Method according to any of the previous claims, wherein additionally one or more of the following drying operation parameters:
- the compressor output,
- the drying air fan performance, and
- the activation of a or the cooling air fan (40),
are selected by a control unit (44) of the drying apparatus (2) in dependency of one or more of the following:
- a laundry drying program or a laundry drying option set by a user via an input selector (48) of the drying apparatus (2);
- the laundry amount,
- a laundry type as set by a user or as estimated by the drying apparatus (2); and
- the duration of the laundry drying program set by a user or as estimated by the drying apparatus (2).

13. Method according to any of the previous claims, wherein, when the compressor output is reduced, the compressor output is decreased over the time or the compressor output is additionally decreased according to a monotonically decreasing function or strictly monotonically decreasing function or a linearly decreasing function or a linearly decreasing function having two or more gradients.

14. Laundry drying apparatus (2), in particular a laundry dryer or a washer-dryer, the laundry drying apparatus comprising:
a drum (18) adapted to receive laundry (19) for drying the laundry using drying air,
a drying air fan (8) adapted to convey drying air through the drum (18),
a motor (46) adapted to drive the drying air fan (8),
a heat-pump system (4) comprising a first heat exchanger (10) adapted to heat the drying air, a second heat exchanger (12) adapted to cool the drying air for humidity condensation, and a variable speed and/or variable power compressor (16) adapted to circulate refrigerant through the first and second heat exchangers (10, 12),
a laundry load indicating or detecting unit (52) adapted to determine or estimate the amount of laundry in the drum (18), and
a control unit (44) controlling the execution of a drying program, wherein the control unit (44) is adapted to execute the drying program by:
starting a drying program for drying the laundry received in the drum (18), and
operating the compressor (16) at an initial compressor performance,
**characterized in that**
the control unit (44) is further adapted to execute the drying program by:
setting a threshold value for an operation parameter (P) of the heat pump system in dependency of the amount of laundry determined or estimated by the laundry load indicating or detecting unit (52) at least once during the drying program,
monitoring an operation parameter of the heat pump system of the laundry drying apparatus, and
operating the compressor (16) at a reduced compressor output if the monitored operation parameter reaches or exceeds the set threshold value.

15. Laundry drying apparatus according to claim 14, wherein the control unit (44) is adapted to control the drying program by any of the previous claims 2 to 13.

## Patentansprüche

1. Verfahren zum Betreiben einer Wäschetrocknungsvorrichtung, insbesondere eines Wäschetrockners oder eines Wasch-Trockners, während eines Trocknungsprogramms,
wobei die Wäschetrocknungsvorrichtung (2) Folgendes umfasst:
eine Trommel (18), die ausgelegt ist, Wäsche (19) zum Trocknen der Wäsche unter Verwendung von Trocknungsluft aufzunehmen,
ein Trocknungsluftgebläse (8), das ausgelegt ist, die Trocknungsluft durch die Trommel (18) zu schicken,
einen Motor (46), der ausgelegt ist, das Trocknungsluftgebläse (8) anzutreiben,
ein Wärmepumpensystem (4), das einen ersten Wärmetauscher (10), der ausgelegt ist, die Trocknungsluft zu heizen, einen zweiten Wärmetauscher (12), der ausgelegt ist, die Trocknungsluft für eine Feuchtigkeitskondensation zu kühlen, und einen Kompressor (16), der ausgelegt ist, Kühlmittel durch den ersten und den zweiten Wärmetauscher (10, 12) umlaufen zu lassen, umfasst, und
eine Einheit (52) zum Anzeigen oder Detektieren einer Wäschelast, die ausgelegt ist, die Wäschemenge in der Trommel zu bestimmen oder abzuschätzen,
wobei der Kompressor (16) ein Kompressor mit variabler Drehzahl und/oder variabler Leistung ist; und wobei das Verfahren die folgenden Schritte umfasst:
Starten (S6) eines Trocknungsprogramms zum Trocknen der Wäsche, die in der Trommel (18) aufgenommen ist,
Betreiben (S8c, S10) des Kompressors (16) mit einer anfänglichen Kompressorleistung,
Bestimmen oder Abschätzen (S8b, S12) der Wäschemenge in der Trommel wenigstens einmal während des Trocknungsprogramms,
**dadurch gekennzeichnet, dass**
das Verfahren ferner die folgenden Schritte umfasst:
Einstellen (S14) eines Schwellenwerts (TH1) für einen Betriebsparameter (P) des Wärmepumpensystems in Abhängigkeit von der bestimmten oder abgeschätzten Wäschemenge,
Überwachen des Betriebsparameters (P) des Wärmepumpensystems der Wäschetrocknungsvorrichtung (2), und
Betreiben (S20) des Kompressors (16) mit einer verringerten Kompressorleistung, falls der überwachte Betriebsparameter (P) den eingestellten Schwellenwert (TH1) erreicht oder überschreitet.

2. Verfahren nach Anspruch 1, wobei das Einstellen (S14) des Schwellenwerts (TH1) einen oder mehrere der folgenden Bedingungen umfasst:
ein erster Schwellenwert (TH1high) kann in Reaktion auf eine erste Wäschemenge (volle Beladung) ausgewählt werden und ein zweiter Schwellenwert (TH1low) kann in Reaktion auf eine zweite Wäschemenge (halbe Beladung) ausgewählt werden, wobei der erste Schwellenwert (TH1high) höher als der zweite Schwellenwert (TH1low) ist und wobei die erste Wäschemenge (volle Beladung) größer als die zweite Wäschemenge (halbe Beladung) ist,
wenigstes zwei Schwellenwerte können ausgewählt werden und es gibt wenigstens zwei Bereiche von Wäschemengen, die jeweils sich nicht überschneidende Bereiche aufweisen, wobei für den unteren Bereich der Wäschemengen der erste Schwellenwert (TH1low) ausgewählt wird und für den höheren Bereich der Wäschemengen der zweite Schwellenwert (TH1high) ausgewählt wird,
der Wert des Schwellenwerts (TH1) steigt in Reaktion auf die Erhöhung der Wäschemenge oder ist umso höher, je größer die Wäschemenge ist, und
der Wert des Schwellenwerts (TH1) ist eine Stufenfunktion in Abhängigkeit von dem Wert der Wäschemenge, wobei die Stufenfunktion wenigstens eine, zwei, drei oder mehr Stufen aufweist, wobei die Stufenfunktion vorzugsweise eine monoton zunehmende Funktion ist.

3. Verfahren nach Anspruch 1 oder 2, wobei während des Trocknungsprogramms der Schwellenwert (TH1, TH2) wenigstens zwei Mal eingestellt wird, wobei wenigstens einer oder wenigstens zwei der Schwellenwerte in Abhängigkeit von der Wäschemenge eingestellt werden und wobei sich jeder der wenigstens zwei Schwellenwerte von dem anderen Schwellenwert unterscheidet.

4. Verfahren nach einem der vorhergehenden Ansprüche, wobei die Wäschemenge, die zum Einstellen des Schwellenwerts (TH1) oder der zwei oder mehr Schwellenwerte (TH1, TH2) verwendet wird, die Wäschemenge ist, die durch die Detektionseinheit (52) in wenigstens einer der folgenden Situationen angezeigt oder detektiert wird:
- in einer Startphase (S8b) des Trocknungsprogramms,
- in einer Anfangsphase (S8b, S12) nach dem Starten der Drehung der Trommel (18) zum ersten Mal während des Trocknungsprogramms,
- wenn die Detektionseinheit (52) das erste Mal eine zuverlässige und/oder reproduzierbare Wäschemenge nach dem Starten des Trocknungsprogramms anzeigt oder detektiert, und
- als eine Eingabe durch einen Benutzer über ein Eingabefeld (48) der Vorrichtung (2).

5. Verfahren nach einem der vorhergehenden Ansprüche, wobei der überwachte Betriebsparameter (P) ein oder mehrere Parameter aus den folgenden Parametern sind:
eine Temperatur des Wärmepumpensystems (4),
eine Temperatur des Kompressors (16),
eine Temperatur des Kühlmittels,
eine Temperatur des Kühlmittels an dem Kompressorauslass (42b),
eine Temperatur des Kühlmittels an dem Kondensatorauslass (T_{refrigerant}, 42a),
eine Temperatur, die für eine Temperatur des Wärmepumpensystems (4) kennzeichnend ist, und
ein Druck in dem Wärmepumpensystem (4).

6. Verfahren nach einem der vorhergehenden Ansprüche,
wobei die Wäschetrocknungsvorrichtung (2) ferner ein Kühlluftgebläse (40) umfasst, das ausgelegt ist, den Kompressor (16) zu kühlen, und
wobei das Kühlluftgebläse (40) zum Kühlen des Kompressors (16) in Abhängigkeit von einem oder mehreren der folgenden Parameter aktiviert wird:
ein Kompressor-Kühlprofil,
ein Kompressor-Kühlprofil, das in Abhängigkeit von der Wäschemenge eingestellt wird,
ein oder der Betriebsparameter (P) des Wärmepumpensystems (4), der einen Gebläseaktivierungsschwellenwert erreicht oder überschreitet, und
der überwachte Betriebsparameter (P), der den eingestellten Schwellenwert (TH1, TH2) erreicht oder überschreitet.

7. Verfahren nach Anspruch 6, wobei der Gebläseaktivierungsschwellenwert eine oder mehrere der folgenden Bedingungen erfüllt:
er ist niedriger oder höher als der eingestellte Schwellenwert (TH1),
er ist in Abhängigkeit von der Wäschemenge eingestellt, und
er ist ein festgelegter Wert, der höher oder niedriger als der eingestellte Schwellenwert (TH1) ist.

8. Verfahren nach einem der vorhergehenden Ansprüche,
wobei die Wäschetrocknungsvorrichtung (2) ferner ein oder das Kühlluftgebläse (40) umfasst, das ausgelegt ist, den Kompressor (16) zu kühlen,
wobei bei einem ersten Wert oder einem ersten Wertebereich der Wäschemenge das Kühlluftgebläse (40) bei einem ersten Satz von Hysteresetemperatur-Schwellenwerten der Wärmepumpen-Systemtemperatur aktiviert bzw. deaktiviert wird und die Kompressorleistung bei dem eingestellten ersten Temperaturschwellenwert (TH1low) der Wärmepumpen-Systemtemperatur verringert wird,
wobei bei einem zweiten Wert oder einem zweiten Wertebereich der Wäschemenge das Kühlluftgebläse (40) bei einem zweiten Satz von Hysteresetemperatur-Schwellenwerten der Wärmepumpen-Systemtemperatur aktiviert bzw. deaktiviert wird und die Kompressorleistung bei dem eingestellten zweiten Temperaturschwellenwert (TH1high) der Wärmepumpen-Systemtemperatur verringert wird, und
wobei sich der erste und der zweite Satz von Hysteresetemperaturen und der erste und der zweite eingestellte Schwellenwert (TH1low, TH1high) voneinander unterscheiden.

9. Verfahren nach einem der vorhergehenden Ansprüche, wobei die Kompressorleistung eine oder mehrere der folgenden Größen ist:
eine Motordrehzahl eines Motors, der den Kompressor (16) antreibt,
eine elektrische Leistung, die dem Kompressor (16) zugeführt wird,
die Frequenz der elektrischen Spannung, die dem Kompressor (16) zugeführt wird, und
der Strom, der dem Kompressor (16) zugeführt wird.

10. Verfahren nach einem der vorhergehenden Ansprüche, wobei das Trocknungsluftgebläse (8) ein Luftgebläse mit einstellbarer Drehzahl und/oder Leistung ist oder durch einen einstellbaren Gebläsemotor angetrieben wird und wobei das Verfahren ferner wenigstens einen der folgenden Schritte umfasst:
Einstellen der Drehzahl und/oder der Leistung des Trocknungsluftgebläses (8) in Abhängigkeit von der Wäschemenge,
Betreiben des Trocknungsluftgebläses mit einem ersten Wert der Drehzahl und/oder Leistung, falls der überwachte Betriebsparameter (P, 43) unter einem Trocknungsluftgebläse-Schwellenwert oder unter dem eingestellten Schwellenwert liegt, und
Betreiben des Trocknungsluftgebläses mit einem zweiten Wert der Drehzahl und/oder Leistung, falls der überwachte Betriebsparameter (P, 43) über dem Trocknungsluftgebläse-Schwellenwert oder über dem eingestellten Schwellenwert liegt.

11. Verfahren nach einem der vorhergehenden Ansprüche, wobei die Kompressorleistung durch Verringern der Kompressorleistung um wenigstens 10%, 20%, 25%, 30% oder 40% verringert wird, oder wobei die Verringerung der Kompressorleistung in dem Bereich von 85-95%, 75-90% oder 50-75% liegt.

12. Verfahren nach einem der vorhergehenden Ansprüche, wobei zusätzlich einer oder mehrere der folgenden Trocknungsbetriebsparameter:
- die Kompressorleistung,
- die Trocknungsluftgebläseleistung, und
- die Aktivierung eines oder des Kühlluftgebläses (40) durch eine Steuereinheit (44) der Trocknungsvorrichtung (2) in Abhängigkeit von einem oder mehreren der folgenden Parameter ausgewählt wird:
- ein Wäschetrocknungsprogramm oder eine Wäschetrocknungsoption, die durch einen Benutzer über eine Eingabe-Auswahleinheit (48) der Trocknungsvorrichtung (2) eingestellt wird;
- die Wäschemenge,
- eine Wäscheart, die durch einen Benutzer eingestellt oder durch die Trocknungsvorrichtung (2) abgeschätzt wird; und
- die Dauer des Wäschetrocknungsprogramms, die durch einen Benutzer eingestellt oder durch die Trocknungsvorrichtung (2) abgeschätzt wird.

13. Verfahren nach einem der vorhergehenden Ansprüche, wobei dann, wenn die Kompressorleistung verringert wird, die Kompressorleistung mit der Zeit verringert wird oder die Kompressorleistung in Übereinstimmung mit einer monoton abnehmenden Funktion oder einer streng monoton abnehmenden Funktion oder einer linear abnehmenden Funktion oder einer linear abnehmenden Funktion, die zwei oder mehrere Steigungen aufweist, zusätzlich verringert wird.

14. Wäschetrocknungsvorrichtung (2), insbesondere ein Wäschetrockner oder ein Wasch-Trockner, wobei die Wäschetrocknungsvorrichtung Folgendes umfasst:
eine Trommel (18), die ausgelegt ist, Wäsche (19) zum Trocknen der Wäsche unter Verwendung von Trocknungsluft aufzunehmen,
ein Trocknungsluftgebläse (8), das ausgelegt ist, Trocknungsluft durch die Trommel (18) zu schicken,
einen Motor (46), der ausgelegt ist, das Trocknungsluftgebläse (8) anzutreiben,
ein Wärmepumpensystem (4), das einen ersten Wärmetauscher (10), der ausgelegt ist, die Trocknungsluft zu heizen, einen zweiten Wärmetauscher (12), der ausgelegt ist, die Trocknungsluft für eine Feuchtigkeitskondensation zu kühlen, und einen Kompressor (16) mit variabler Drehzahl und/oder variabler Leistung, der ausgelegt ist, Kühlmittel durch den ersten und den zweiten Wärmetauscher (10, 12) umlaufen zu lassen, umfasst,
eine Einheit (52) zum Anzeigen oder Detektieren einer Wäschelast, die ausgelegt ist, die Wäschemenge in der Trommel (18) zu bestimmen oder abzuschätzen, und
eine Steuereinheit (44), die das Ausführen eines Trocknungsprogramms steuert, wobei die Steuereinheit (44) ausgelegt ist, das Trocknungsprogramm durch die folgenden Schritte auszuführen:
Starten eines Trocknungsprogramms zum Trocknen der Wäsche, die in der Trommel (18) aufgenommen ist, und
Betreiben des Kompressors (16) mit einer anfänglichen Kompressorleistung,
**dadurch gekennzeichnet, dass**
die Steuereinheit (44) ferner ausgelegt ist, das Trocknungsprogramm durch die folgenden Schritte auszuführen:
Einstellen eines Schwellenwerts für einen Betriebsparameter (P) des Wärmepumpensystems in Abhängigkeit von der Wäschemenge, die durch die Einheit (52) zum Anzeigen oder Detektieren einer Wäschelast wenigstens einmal während des Trocknungsprogramms bestimmt oder abgeschätzt wird,
Überwachen eines Betriebsparameters des Wärmepumpensystems der Wäschetrocknungsvorrichtung, und
Betreiben des Kompressors (16) mit einer verringerten Kompressorleistung, falls der überwachte Betriebsparameter den eingestellten Schwellenwert erreicht oder überschreitet.

15. Wäschetrocknungsvorrichtung nach Anspruch 14, wobei die Steuereinheit (44) ausgelegt ist, das Trocknungsprogramm nach einem der vorhergehenden Ansprüche 2 bis 13 zu steuern.

## Revendications

1. Procédé de fonctionnement d'un appareil de séchage de linge, en particulier un sèche-linge ou une machine à laver séchante, pendant un programme de séchage, l'appareil de séchage de linge (2) comprenant :
un tambour (18) conçu pour recevoir du linge (19) pour sécher le linge au moyen d'air de séchage ;
un ventilateur d'air de séchage (8) conçu pour acheminer l'air de séchage dans le tambour (18) ;
un moteur (46) conçu pour entraîner le ventilateur d'air de séchage (8) ;
un système de pompe à chaleur (4) comprenant un premier échangeur de chaleur (10) conçu pour chauffer l'air de séchage, un second échangeur de chaleur (12) conçu pour refroidir l'air de séchage pour condenser l'humidité, et un compresseur (16) conçu pour faire circuler un fluide frigorigène à travers les premier et second échangeurs de chaleur (10, 12) ; et
une unité de d'indication ou de détection de charge de linge (52), conçue pour déterminer ou estimer la quantité de linge dans le tambour,
le compresseur (16) étant un compresseur à vitesse variable et/ou à puissance variable ; et
le procédé consistant à :
démarrer (S6) un programme de séchage pour sécher le linge reçu dans le tambour (18) ;
faire fonctionner (S8c, S10) le compresseur (16) à une sortie de compresseur initiale ;
déterminer ou estimer (S8b, S12) la quantité de linge dans le tambour au moins une fois pendant le programme de séchage,
le procédé étant **caractérisé en ce qu'**il consiste en outre à :
fixer (S14) une valeur-seuil (TH1) pour un paramètre de fonctionnement (P) du système de pompe à chaleur selon la quantité de linge déterminée ou estimée ;
surveiller le paramètre de fonctionnement (P) du système de pompe à chaleur de l'appareil de séchage de linge (2) ; et
faire fonctionner (S20) le compresseur (16) à une sortie de compresseur réduite si le paramètre de fonctionnement (P) surveillé atteint ou dépasse la valeur-seuil (TH1) fixée.

2. Procédé selon la revendication 1, dans lequel la fixation (S14) de la valeur-seuil (TH1) comprend un ou plusieurs critères parmi :
un premier seuil (TH1haut) est sélectionnable en réponse à une première quantité de linge (pleine charge) et un second seuil (TH1bas) est sélectionnable en réponse à une seconde quantité de linge (demi-charge), le premier seuil (TH1haut) étant supérieur au second seuil (TH1bas) et la première quantité de linge (pleine charge) étant supérieure à la seconde quantité de linge (demi-charge) ;
au moins deux valeurs-seuils sont sélectionnables et il y a au moins deux plages de quantités de linge ayant chacune des plages non chevauchantes, la première valeur-seuil (TH1bas) étant sélectionnée pour la plage inférieure de quantités de linge et la seconde valeur-seuil (TH1haut) étant sélectionnée pour la plage supérieure de quantités de linge ;
la valeur de la valeur-seuil (TH1) augmente en réponse à l'augmentation de la quantité de linge ou est maximale si la quantité de linge est maximale ; et
la valeur de la valeur-seuil (TH1) est une fonction en escalier selon la valeur de la quantité de linge, la fonction en escalier ayant au moins un, deux ou trois échelons ou plus, la fonction en escalier étant de préférence une fonction de croissance monotone.

3. Procédé selon la revendication 1 ou 2, dans lequel, pendant le programme de séchage, la valeur-seuil (TH1, TH2) est fixée au moins deux fois, au moins une ou au moins deux des valeurs-seuils étant fixées selon la quantité de linge et chacune des au moins deux valeurs-seuils étant différente des autres valeurs-seuils.

4. Procédé selon l'une quelconque des revendications précédentes, dans lequel la quantité de linge utilisée pour fixer la valeur-seuil (TH1) ou les au moins deux valeurs-seuils (TH1, TH2) est la quantité de linge indiquée ou détectée par l'unité de détection (52) dans au moins un des cas suivantes :
dans une phase de démarrage (S8b) du programme de séchage ;
dans une phase initiale (S8b, S12) après le démarrage de la rotation du tambour (18) la première fois pendant le programme de séchage ;
quand l'unité de détection (52) indique ou détecte la première fois une quantité de linge fiable et/ou reproductible après le démarrage du programme de séchage ; et
comme une entrée par un utilisateur par l'intermédiaire d'un panneau d'entrée (48) de l'appareil (2).

5. Procédé selon l'une quelconque des revendications précédentes, dans lequel le paramètre de fonctionnement (P) surveillé est un ou plusieurs paramètres parmi :
une température du système de pompe à chaleur (4) ;
une température du compresseur (16) ;
une température du fluide frigorigène ;
une température du fluide frigorigène à la sortie du compresseur (42b) ;
une température du fluide frigorigène à la sortie du condenseur (T_{fiuide_frigorigène}, 42a) ;
une température représentative d'une température du système de pompe à chaleur (4) ; et
une pression dans le système de pompe à chaleur (4).

6. Procédé selon l'une quelconque des revendications précédentes,
dans lequel l'appareil de séchage de linge (2) comprend en outre un ventilateur d'air de refroidissement (40) conçu pour refroidir le compresseur (16), et
dans lequel le ventilateur d'air de refroidissement (40) est activé pour refroidir le compresseur (16) selon un ou plusieurs critères parmi :
un profil de refroidissement de compresseur ;
un profil de refroidissement de compresseur fixé selon la quantité de linge ;
un ou le paramètre de fonctionnement (P) du système de pompe à chaleur (4) atteignant ou dépassant un seuil d'activation de ventilateur ; et
le paramètre de fonctionnement (P) surveillé atteignant ou dépassant la valeur-seuil (TH1, TH2) fixée.

7. Procédé selon la revendication 6, dans lequel le seuil d'activation de ventilateur :
inférieur ou supérieur à la valeur-seuil (TH1) fixée, et/ou
fixé selon la quantité de linge ; et/ou
une valeur prédéterminée supérieure ou inférieure à la valeur-seuil (TH1) fixée.

8. Procédé selon l'une quelconque des revendications précédentes,
dans lequel l'appareil de séchage de linge (2) comprend en outre un ou le ventilateur d'air de refroidissement (40) conçu pour refroidir le compresseur (16),
dans lequel, à une première valeur ou à une première plage de valeurs de la quantité de linge, le ventilateur d'air de refroidissement (40) est activé/désactivé à un premier ensemble de seuils de température d'hystérésis de la température de système de pompe à chaleur, et la sortie de compresseur est réduite au premier seuil de température (TH1bas) fixé de la température de système de pompe à chaleur,
dans lequel, à une seconde valeur ou à une seconde plage de valeurs de la quantité de linge, le ventilateur d'air de refroidissement (40) est activé/désactivé à un second ensemble de seuils de température d'hystérésis de la température de système de pompe à chaleur, et la sortie de compresseur est réduite au second seuil de température (TH1haut) fixé de la température de système de pompe à chaleur, et
dans lequel les premier et second ensembles de températures d'hystérésis et les premier et second seuils (TH1bas, TH1haut) fixés sont différents les uns des autres.

9. Procédé selon l'une quelconque des revendications précédentes, dans lequel la sortie de compresseur :
une vitesse de moteur d'un moteur entraînant le compresseur (16) ; et/ou
une puissance électrique fournie au compresseur (16) ; et/ou
la fréquence de la tension électrique fournie au compresseur (16) ; et/ou
le courant fourni au compresseur (16).

10. Procédé selon l'une quelconque des revendications précédentes, dans lequel le ventilateur d'air de séchage (8) est un ventilateur d'air à vitesse et/ou puissance variable(s) ou est entraîné par un moteur de ventilateur réglable, et le procédé comprenant en outre au moins une des étapes suivantes consistant à :
régler la vitesse et/ou la puissance du ventilateur d'air de séchage (8) selon la quantité de linge ;
faire fonctionner le ventilateur d'air de séchage à une première valeur de la vitesse et/ou de la puissance si le paramètre de fonctionnement (P, 43) surveillé est inférieur à une valeur-seuil de ventilateur d'air de séchage ou inférieur à la valeur-seuil fixée ; et
faire fonctionner le ventilateur d'air de séchage à une seconde valeur de la vitesse et/ou de la puissance si le paramètre de fonctionnement (P, 43) surveillé est supérieur à la valeur-seuil de ventilateur d'air de séchage ou supérieur à la valeur-seuil fixée.

11. Procédé selon l'une quelconque des revendications précédentes, dans lequel la sortie de compresseur est réduite en réduisant la sortie de compresseur d'au moins 10 %, 20 %, 25 %, 30 % ou 40 % ou la réduction de la sortie de compresseur est dans la plage de 85 à 95 %, 75 à 90 % ou 50 à 75 %.

12. Procédé selon l'une quelconque des revendications précédentes, dans lequel en outre un ou plusieurs des paramètres d'opération de séchage suivants :
la sortie de compresseur,
la performance de ventilateur d'air de séchage, et
l'activation d'un ou du ventilateur d'air de refroidissement (40),
sont sélectionnés par une unité de contrôle (44) de l'appareil de séchage (2) selon un ou plusieurs des paramètres suivants :
un programme de séchage de linge ou une option de séchage de linge réglé(e) par un utilisateur par l'intermédiaire d'un sélecteur d'entrée (48) de l'appareil de séchage (2) ;
la quantité de linge ;
un type de linge réglé par un utilisateur ou estimé par l'appareil de séchage (2) ; et
la durée du programme de séchage de linge réglé par un utilisateur ou estimé par l'appareil de séchage (2).

13. Procédé selon l'une quelconque des revendications précédentes, dans lequel, quand la sortie de compresseur est réduite, la sortie de compresseur est diminuée dans le temps ou la sortie de compresseur est diminuée en outre selon une fonction de décroissance monotone ou une fonction de décroissance strictement monotone ou une fonction de décroissance linéaire ou une fonction de décroissance linéaire ayant au moins deux gradients.

14. Appareil de séchage de linge (2), en particulier un sèche-linge ou une machine à laver séchante, l'appareil de séchage de linge comprenant :
un tambour (18) conçu pour recevoir du linge (19) pour sécher le linge au moyen d'air de séchage ;
un ventilateur d'air de séchage (8) conçu pour acheminer de l'air de séchage dans le tambour (18) ;
un moteur (46) conçu pour entraîner le ventilateur d'air de séchage (8) ;
un système de pompe à chaleur (4) comprenant un premier échangeur de chaleur (10) conçu pour chauffer l'air de séchage, un second échangeur de chaleur (12) conçu pour refroidir l'air de séchage pour condenser l'humidité, et un compresseur à vitesse variable et/ou à puissance variable (16) conçu pour faire circuler un fluide frigorigène à travers les premier et second échangeurs de chaleur (10, 12) ;
une unité d'indication ou de détection de charge de linge (52), conçue pour déterminer ou estimer la quantité de linge dans le tambour (18) ; et
une unité de contrôle (44) contrôlant l'exécution d'un programme de séchage, l'unité de contrôle (44) étant conçue pour exécuter le programme de séchage en réalisant les étapes consistant à :
démarrer un programme de séchage pour sécher le linge reçu dans le tambour (18) ; et
faire fonctionner le compresseur (16) à une performance de compresseur initiale,
l'appareil étant **caractérisé en ce que** :
l'unité de contrôle (44) est en outre conçue pour exécuter le programme de séchage en réalisant les étapes consistant à :
fixer une valeur-seuil pour un paramètre de fonctionnement (P) du système de pompe à chaleur selon la quantité de linge déterminée ou estimée par l'unité d'indication ou de détection de charge de linge (52) au moins une fois pendant le programme de séchage ;
surveiller un paramètre de fonctionnement du système de pompe à chaleur de l'appareil de séchage de linge ; et
faire fonctionner le compresseur (16) à une sortie de compresseur réduite si le paramètre de fonctionnement surveillé atteint ou dépasse la valeur-seuil fixée.

15. Appareil de séchage de linge selon la revendication 14, dans lequel l'unité de contrôle (44) est conçue pour contrôler le programme de séchage selon l'une quelconque des revendications précédentes 2 à 13.
